# EUROPEAN PATENT APPLICATION

(11) **EP 2 922 167 A1**
(43) Date of publication of application: **23.09.2015**
(21) Application number: 13852344.4
(22) Date of filing: 06.11.2013
(51) Int. Cl.: H02J 3/38

(54) **RELAY OPERATION SETTING DEVICE, POWER CONDITIONER AND DISTRIBUTED POWER SUPPLY SYSTEM**

(30) Priority: 16.11.2012 JP 2012252242
(71) Applicant: Panasonic Intellectual Property Management Co., Ltd., Osaka-shi, Osaka 540-6207 (JP)
(72) Inventor: SAWANO, Satoshi, Osaka 540-6207 (JP)
(74) Representative: Grünecker Patent- und Rechtsanwälte PartG mbB
(86) International application number: PCT/JP2013/006528
(87) International publication number: WO 2014/076906

(57) **Abstract**

A relay operation setting device setting a de-parallelizing condition for a protection relay that controls de-parallelizing of a distributed power source from a power system, including: a frequency detector detecting a frequency of a system voltage in the power system, an angular acceleration calculator calculating an angular acceleration of the system voltage according to the frequency; and a protection relay setting determiner determining, in accordance with the angular acceleration, whether or not the de-parallelizing condition for the protection relay is a fault ride through condition in which the distributed power source is not de-parallelized when the fault ride through condition is satisfied during a fault of the power system. System connection is maintained without de-parallelizing the distributed power source when a power system disturbance satisfies the FRT condition, thereby enabling suppression of unnecessary de-parallelizing.

## Description

### [Technical Field]

The present disclosure pertains to a relay operation setting device determining a setting for a protection relay used for grid-connecting a distributed power source, and to a power conditioner and a distributed power source equipped therewith.

### [Background Art]

Conventionally, distributed power sources such as solar cells and fuel cells are used in a distributed power source system equipped with a power conditioner that converts the direct current (hereinafter, DC) electric power produced by the distributed power source into alternating current (hereinafter, AC) electric power, and supplying the converted electric power to a power system. The distributed power source system is connected to a power system for supplying commercial power to a power-incoming unit. The electric power generated by the distributed power source is used in combination with the supplied commercial power. This type of system is called a grid-connected system. In a grid-connected system, connecting the distributed power source to the power system is termed parallelizing, and disconnecting the distributed power source from the power system is termed de-parallelizing. Also, the system is grid-connected when the distributed power source is connected to the power system. Also, a situation where the power system is connected to the distributed power source system, e.g., when the distributed power source system is connected by a low-voltage distribution system that is a single-phase three-wire system , that system is called a link system.

When an accident or emergency occurs in the link system, a breaker in the link system or on the commercial-power side of the link is operated in order to disconnect the link system, in whole or in part, from the commercial power source. The link system thus disconnected from the commercial power source continues to operate while connected to the distributed power source. This state of supplying electric power to the link system while disconnected from the commercial power source is termed islanding.

The link system should normally be without voltage when disconnected from the commercial power source. However, when islanding, the distributed power source charges the link system despite disconnection from the commercial power source. Thus, islanding is a problem in terms of link system protection operations, as well as electrical fire prevention work. Also, when the link system is disconnected from the commercial power source, the electric power supplied by the distributed power source and consumed by the load are out of balance. This causes a problem in that the voltage and voltage frequency output by the distributed power source greatly deviate from the predetermined ranges thereof, thereby damaging the load. Accordingly, in order to quickly de-parallelize the distributed power source from the link system when islanding occurs, technology is used to detect the islanding state by detecting the system voltage frequency of the link system, or similar (e.g., see Patent Literature 1).

### [Citation List]

### [Patent Literature]

[Patent Literature 1]
Japanese Patent Application Publication No. 2009-136095

### [Summary of Invention]

### [Technical Problem]

As distributed power source systems are introduced and expanded, many distributed power source systems are grid-connected to the power system. In these circumstances, mistakenly detecting a disturbance in the power system as being islanding causes these many distributed power source systems to be de-parallelized from the power system all at once, which can pose a problem for electric product quality within the power system.

As such, the present disclosure aims to provide technology for constraining unnecessary de-parallelization, order to ensure electric product quality.

### [Solution to Problem]

In order to solve the above-described problem, the present disclosure discloses a relay operation setting device setting a de-parallelizing condition for a protection relay that controls de-parallelizing of a distributed power source from a power system, the relay operation setting device comprising: a frequency detector detecting a frequency of a system voltage in the power system; an angular acceleration calculator calculating an angular acceleration of the system voltage according to the frequency; and a protection relay setting determiner determining, in accordance with the angular acceleration, whether or not the de-parallelizing condition for the protection relay is a fault ride through condition in which the distributed power source is not de-parallelized when the fault ride through condition is satisfied during a fault of the power system.

### [Advantageous Effects of Invention]

According to the above relay operation setting device, the de-parallelizing condition for the protection relay is switched as needed to a Fault Ride Through (hereinafter, FRT) condition that does not trigger de-parallelizing when satisfied, enabling unnecessary de-parallelizing of the distributed power source to be constrained when the FRT condition occurs.

### [Brief Description of Drawings]

Fig. 1 is a block diagram showing the configuration of a power conditioner 100 pertaining to Embodiment 1.
Fig. 2 is a block diagram showing the configuration of a power conditioner control device 107 pertaining to Embodiment 1.
Fig. 3 is a flowchart of operations performed by a relay operation setting device 130 pertaining to Embodiment 1.
Figs. 4A and 4B give frequency relay 127 and voltage relay 128 de-parallelizing condition setting examples, where Fig. 4A conforms to a grid interconnection code (JEAC 9701-2010) and to a standard based on the grid interconnection code (JEAC 9710-2010 (2011 supplement (part 1))), and Fig. 4B conforms to the DIN V VDE V 0126-1-1(VDE V 0126-1-1) and VDN Transmission Code standards.
Figs. 5A, 5B, and 5C represent the distributed power source system pertaining to Embodiment 1, where Fig. 5A illustrates system voltage frequency fluctuation, Fig. 5B lists de-parallelizing conditions and operations of the frequency relay 127 in correspondence with the fluctuation of Fig. 5A, and Fig. 5C lists the operations of the frequency relay 127 in correspondence with the fluctuation of Fig. 5A when the de-parallelizing condition is fixed at the grid connection condition.
Fig. 6 illustrates properties of a phase shift adder 124 pertaining to Embodiment 1.
Fig. 7 is a block diagram showing the configuration of a power conditioner control device 200 pertaining to Embodiment 2.
Fig. 8 illustrates properties of a phase shift adder 224 pertaining to Embodiment 2.
Fig. 9 is a flowchart of operations performed by a relay operation setting device 210 pertaining to Embodiment 2.
Fig. 10 illustrates properties of a phase shift adder pertaining to Embodiment 3.

### [Description of Embodiments]

### (Progress Leading to Invention)

As described above, a conventional distributed power source system is desired in which the distributed power source is de-parallelized when islanding is detected. Accordingly, a distributed power source system is required to have the ability to detect islanding and to quickly de-parallelize the distributed power source once islanding has been detected.

Also, as described above, de-parallelizing the distributed power source may affect the voltage and frequency of the power system. When there are few distributed power source systems, and the electric power supplied by the distributed power sources totals a small amount compared to commercial power sources, then de-parallelizing the distributed power source causes only a small decrease in the electric power supplied to the link system. Therefore, the voltage and frequency of the commercial power source is rarely influenced much. However, as more distributed power sources are connected to the power system. De-parallelizing all the distributed power sources at once causes a momentary drop in the supply of electric power. This produces a problem in that the voltage and frequency of electric power in the link system greatly decrease. A grid-connected system in a power distribution grid is particularly prone to a malfunction in the power generation or transmission system being caused by a momentary drop in voltage or frequency fluctuation for the link system. Mistakenly detecting such cases as being islanding of the distributed power source may cause many distributed power sources to be de-parallelized at once.

In order to address this problem, and given that distributed power sources are expected to be linked in great quantities in the future, functionality is desired by which the distributed power source continues to operate when the decrease in voltage or frequency fluctuation satisfies an FRT condition. Also, when the distributed power source is islanding, or when the distributed power source or the power conditioner has been damaged, or when the link system is experiencing an ongoing malfunction, then swift de-parallelizing of the distributed power source is desired.

A conventional islanding detector quickly de-parallelises the distributed power source upon detecting islanding, even when a link malfunction occurs that satisfies the FRT condition, and for which continued operation is desired. This de-parallelizing is unnecessary. Conversely, when an islanding detector detects the distributed power source as having begun islanding but proceeds to check whether or not continued operation is desired by checking the FRT condition. waiting until the condition is confirmed may mean that the distributed power source cannot be de-parallelized in time after islanding begins.

That said, the inventors have identified trends in the change of system voltage frequency in the power system over time (i.e., in the angular acceleration) for islanding, for frequency fluctuations satisfying the FRT condition, and for grid-connected operation. This lead to the idea of changing an operating condition of a protection relay such as a frequency relay or a voltage relay according to a change in the angular acceleration. The settings are: de-parallelizing the distributed power source upon detecting an abnormal system voltage or frequency that is likely to be islanding; de-parallelizing the distributed power source only after monitoring for whether or not operations satisfy an FRT condition for which continuous operation is desired, and de-parallelizing the distributed power source upon detecting some other type of system voltage or frequency abnormality. Changing the de-parallelizing condition according to the angular acceleration enables avoidance of inappropriate settings of the protection relay and constrains unnecessary de-parallelizing. Also, changing the de-parallelizing condition of the protection relay using the angular acceleration and de-parallelizing only when the de-parallelizing condition is satisfied, rather than directly detecting whether or not to de-parallelize the distributed power source, enables the operating condition of the distributed power source to be checked using the de-parallelizing condition of the protection relay as well as the angular acceleration. Thus, necessary de-paralleling is performed while unnecessary de-parallelizing is constrained.

### (Embodiments)

Embodiments of the disclosure are described below, with reference to the accompanying drawings.

### (Embodiment 1)

### <Configuration>

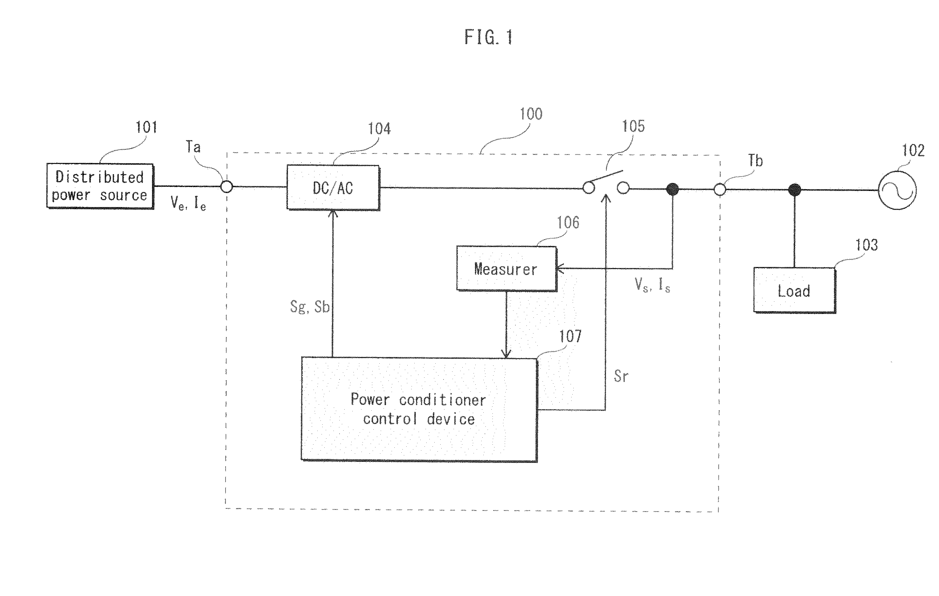

Fig. 1 illustrates the configuration of a power conditioner 100 to which a relay operation setting method is applied, pertaining to Embodiment 1.

The power conditioner 100 includes terminals Ta and Tb. For usage, terminal Ta is connected to a distributed power source 101, and terminal Tb is grid-connected to a power system 102. Electric power is supplied to a load 103, which is connected between the power conditioner 100 and the power system 102.

The distributed power source 101 is a DC power source such as a solar cell, a fuel cell, or a secondary-cell battery such as a lithium-ion battery.

The power conditioner 100 includes an inverter 104, a grid connection relay 105, a measurer 106, and a power conditioner control device 107.

The inverter 104 performs a switching operation in response to a gate signal Sg received from the power conditioner control device 107, converts the DC power received from the distributed power source 101 into AC power, and outputs the converted power toward the terminal Tb. The inverter 104 has, for example, a bridge connection to a plurality of transistors that are switched ON and OFF by the gate signal Sg, and includes a gate circuit in which switching elements are each connected to a diode by an anti-parallel connection. Also, upon input of a gate block signal Sb from the power conditioner control device 107, the inverter 104 performs the gate block by stopping the reception of the gate signal Sg and stopping the ON/OFF operations of the switching elements, and performs de-parallelization of the distributed power source 101 by stopping the current being output toward the terminal Tb. The gate block is removed once the output of the gate block signal Sb has been stopped, at which point the inverter 104 resumes operations in accordance with the gate signal Sg.

The grid connection relay 105 is provided on a line connecting the inverter 104 with the terminal Tb. The grid connection relay 105 opens upon receiving a relay de-parallelizing signal Sr from the power conditioner control device, thereby de-parallelizing the distributed power source 101 from the power system 102.

The measurer 106 measures a voltage value at terminal Tb and outputs the detected value of the measured AC voltage (i.e., the voltage value) V, to the power conditioner control device 107. The measurer 106 also measures a current value of current flowing from the power conditioner 100 to the power system 102 through terminal Tb, and outputs the detected value of the measured AC current (i.e., the current value) Iₛ to the power conditioner control device 107.

The power conditioner control device 107 uses the voltage value Vₛ and the current value Iₛ obtained by the measurer 106 as well as a detected value of the DC voltage (hereinafter, DC voltage detection value) Vₑ and a detected value of the DC current (hereinafter, DC current detection value) Iₑ of the distributed power source 101 to output a pulse width modulation signal (hereinafter, PWM signal) that controls the ON/OFF switching of the switching elements in the inverter 104. The power conditioner control device 107 also detects a malfunction such as islanding or something else (e.g., a frequency or current malfunction) according to the voltage value V_{s.} Then, in order to de-parallelize the distributed power source 101 from the power system 102, the power conditioner control device 107 outputs one or both of the gate block signal Sb to the inverter 104 and the relay de-parallelizing signal Sr to the grid connection relay 105. The power conditioner control device 107 performs A/D conversion of the voltage value Vₛ, the current value Iₛ, the DC voltage detection value Vₑ, and the DC current detection value Iₑ at a predetermined sampling frequency (e.g., 17.5 kHz), and applies later-described processing to the resulting digital signals at each converted cycle.

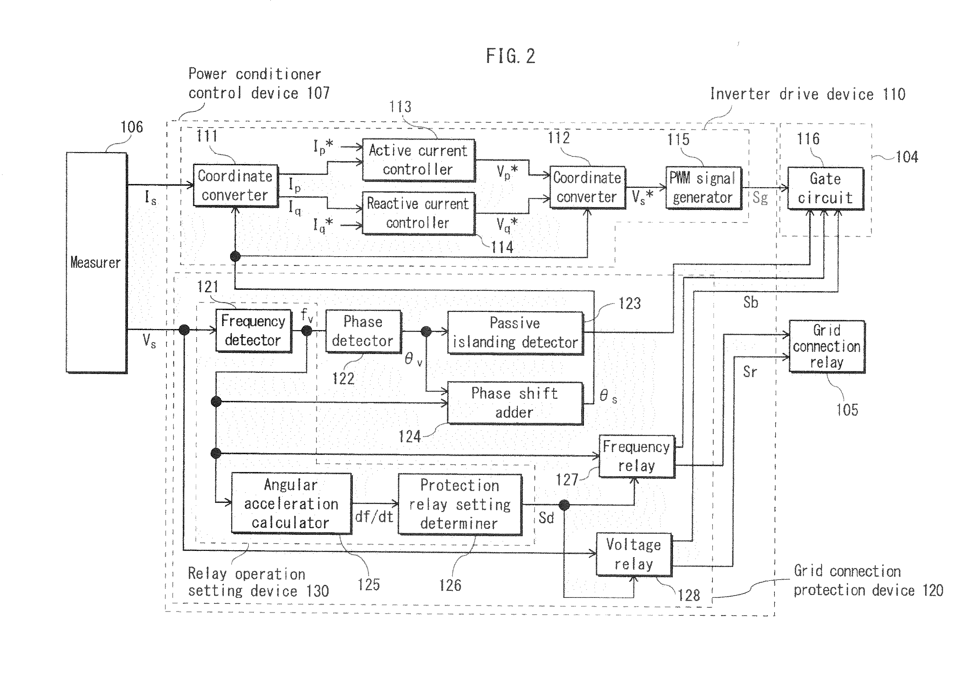

Fig. 2 is a block diagram illustrating the configuration of the power conditioner control device 107 pertaining to the present Embodiment. The power conditioner control device 107 includes an inverter drive device 110 and a grid connection protection device 120. The grid connection protection device 120 in turn includes a relay operation setting device 130.

### (Inverter Drive Device 110)

The inverter drive device 110 receives the current value Iₛ from the measurer 106 and an output current phase θₛ from the grid connection protection device 120, and uses the DC voltage detection value Vₑ and the DC current detection value Iₑ from the distributed power source 101, an active current command value Iₚ^{*} and an reactive current command value I_{q}^{*} to output the gate signal Sg for PWM control of the inverter 104. The inverter drive device 110 includes coordinate converter 111, an active current controller 113, an reactive current controller 114, coordinate converter 112, and a PWM signal generator 115.

The coordinate converter 111 uses the output current phase θₛ to convert the current value Iₛ into coordinate form, and calculates an active current detection value Iₚ (i.e., an active component) and a reactive current detection value I_{q} (i.e., a reactive component). The coordinate converter 111 outputs the active current detection value Iₚ to the active current controller 113 and outputs the reactive current detection value I_{q} to the reactive current controller 114.

The active current controller 113 receives a command value setting (i.e., the active current command value Iₚ^{*}) for the active current detection value. In the present Embodiment, the inverter 104 uses a setting such that Ip^{*}=Iₑ so as to operate at a power factor of one. The active current controller 113 generates an active voltage command value Vₚ^{*} (i.e., a command value for an active voltage detection value Vₚ) as a signal for causing the difference between the active current detection value Iₚ and the active current command value Iₚ^{*} to approach zero, and outputs the signal to the coordinate converter 112.

The reactive current controller 114 receives a command value setting (i.e., the reactive current command value I_{q}^{*}) for the reactive current detection value. In the present Embodiment, the inverter 104 uses a setting such that I_{q}^{*}=0 so as to operate at a power factor of one. The reactive current controller 114 generates a reactive voltage command value V_{q}^{*} (i.e., a command value for a reactive voltage detection value V_{q}) as a signal for causing the difference between the reactive current detection value I_{q} and the reactive current command value I_{q}^{*} to approach zero, and outputs the signal to the coordinate converter 112.

The coordinate converter 112 uses the output current phase θₛ to convert the active voltage command value Vₚ^{*} and the reactive voltage command value V_{q}^{*} into coordinates, and computes an AC voltage command value Vₛ^{*}. The coordinate converter 112 outputs the resulting AC voltage command value Vₛ^{*} to the PWM signal generator 115.

The PWM signal generator 115 generates a pulse signal having a duty ratio corresponding to the AC voltage command value Vₛ^{*} as the gate signal Sg, and outputs it to the gate circuit 116 within the inverter 104. As such, the PWM signal generator 115 performs PWM control on the inverter 104.

### (Grid Connection Protection Device 120)

The grid connection protection device 120 acquires the voltage value Vₛ from the measurer 106, detects a malfunction such as islanding or something else (e.g., a frequency or current malfunction) according to the voltage value Vₛ, and in order to de-parallelize the distributed power source 101 from the power system 102, outputs the gate block signal Sb to the inverter 104 and the relay de-parallellzing signal Sr to the grid connection relay 105. The grid connection protection device 120 includes the relay operation setting device 130, a phase detector 122, a passive islanding detector 123, a phase shift adder 124, a frequency relay 127, and a voltage relay 128. Also, a frequency detector 121 is shared by the grid connection protection device 120 and the relay operation setting device 130. The frequency detector 121 is considered a component of the grid connection protection device 120 for the purposes of the explanations below.

The frequency detector 121 detects a system voltage frequency fᵥ according to the voltage value Vₛ obtained by the measurer 106, then outputs the detected frequency to the phase detector 122, the phase shift adder 124, and an angular acceleration calculator 125. The frequency detector 121 estimates the system voltage frequency fᵥ for each A/D conversion cycle from the voltage value Vₛ using vector control, for example.

The phase detector 122 detects a system voltage phase θᵥ using the system voltage frequency fᵥ acquired by the frequency detector 121, and outputs the detected phase to the passive islanding detector 123 and to the phase shift adder 124. The phase detector 122 estimates the system voltage phase θᵥ for each A/D conversion cycle from the system voltage frequency fᵥ using vector control, for example.

The passive islanding detector 123 monitors the system voltage phase θᵥ and detects a voltage phase jump produced by islanding. Upon detecting a voltage phase jump, the passive islanding detector 123 transmits the gate block signal Sb to the gate circuit 116 in the inverter 104. The gate block of the inverter 104 causes the distributed power source 101 to be de-parallelized from the power system 102.

The phase shift adder 124 obtains the system voltage phase θᵥ from the phase detector 122 and obtains the system voltage frequency fᵥ from the frequency detector 121. The phase shift adder 124 then calculates a phase shift magnitude θ_{sft} according to the system voltage frequency fᵥ Lastly, the phase shift adder 124 adds the calculated phase shift magnitude θ_{sft} to the system voltage phase θᵥ, thereby generating the output current phase θₛ (θₛ=θᵥ+θ_{sft}), and passes the output current phase θₛ to the coordinate converters 111 and 112 within the inverter drive device 110. The phase shift magnitude θ_{sft} is determined by a slip mode frequency shift or frequency feedback function according to the difference between the system voltage frequency fᵥ and a base frequency fₛ (i.e., a frequency deviation) Δf (where Δf=fᵥ-fₛ). The details are described below.

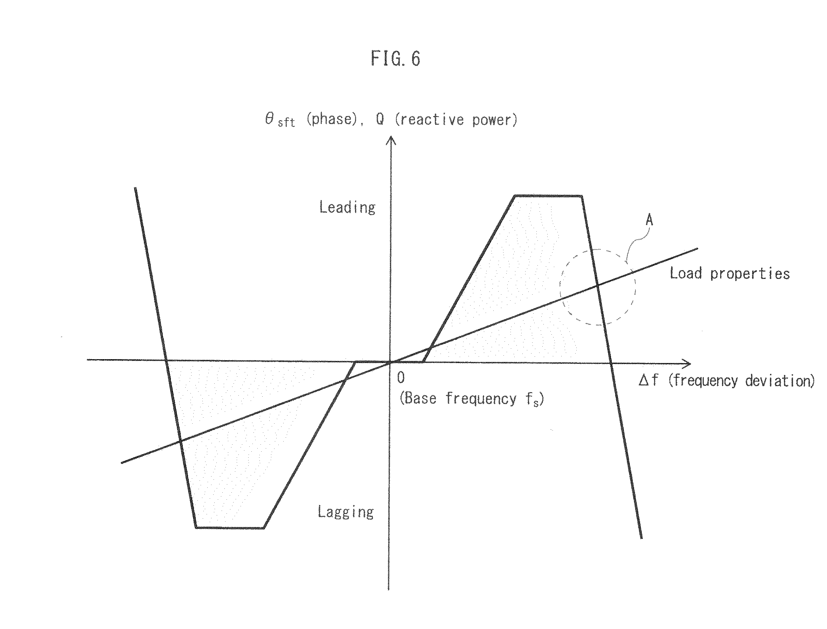

Fig. 6 illustrates frequency deviation and phase properties (i.e., reactive power properties) in the phase shift adder 124. Shifting the output current phase θₛ relative to the system voltage phase θᵥ causes the inverter 104 to supply reactive power to the power system 102 in accordance with the phase shift magnitude θ_{sft}. As shown in Fig. 6, the frequency deviation and phase properties of the phase shift adder 124 are such that the phase shift magnitude θ_{sft} is smaller (and may be zero) when the absolute value of the frequency deviation Δf is smaller, and such that the phase shift magnitude θ_{sft} is greater when the absolute value of the frequency deviation Δf is larger. Also, the phase shift properties are reversed once the absolute value of the frequency deviation Δf reaches or exceeds a fixed value.

As long as the power system 102 does not experience some sort of damage, the power conditioner 100 is synchronised with the frequency of the power system 102 (i.e., the base frequency fₛ), and thus the frequency deviation Δf is zero or has a very small value. Also, as described above, the reactive current command value I_{q}^{*} of the inverter drive device 110 is set to zero in order for the inverter 104 to have a power factor of one. As such, when the distributed power source 101 is grid-connected to the system, the load 103 receives all necessary reactive power from the power system 102.

Conversely, when the distributed power source 101 is disconnected from the system and transfers to islanding, the load 103 does not receive sufficient reactive power. Thus, as shown in Fig. 6, the voltage frequency fᵥ of the power conditioner 100 increases or decreases until the frequency deviation and phase characteristics of the phase shift adder 124 and the load characteristics of the load 103 have matching values. Also, given that the phase shift magnitude θ_{sft}, is greater when the absolute value of the frequency deviation Δf is larger, positive feedback occurs in the frequency deviation Δf such that the absolute value of the angular acceleration |df/dt| becomes large. According the above function, the respective absolute values of the frequency deviation |Δf| and of the angular acceleration |df/dt| both increase greatly when the distributed power source 101 transitions to islanding.

The frequency relay 127 acquires the system voltage frequency fᵥ from the frequency detector 121 and detects whether the system voltage frequency fᵥ has increased above an upper threshold (i.e., a frequency increase) or decreased below a lower threshold (i.e., a frequency decrease). When a frequency increase or a frequency decrease is detected and continues beyond a detection time limit, the frequency relay 127 outputs the gate block signal Sb to the gate circuit 116 within the inverter 104 and outputs the de-parallelizing signal Sr to the grid connection relay 105. Also, the frequency relay 127 stores the upper threshold, the lower threshold, and the detection time limit respectively corresponding to an islanding condition, an FRT condition, and a grid connection condition. Upon receiving a setting signal Sd from the relay operation setting device 130, the upper and lower thresholds for the system voltage frequency fᵥ and the detection time limit are each updated according to de-parallelizing condition indicated by the setting signal Sd.

The voltage relay 128 stores the upper and lower thresholds for the voltage value Vₛ of the power system 102 as well as the detection time limit. The voltage relay 128 obtains the voltage value Vₛ of the power system 102 from the measurer 106 and detects whether the voltage value Vₛ of the power system has increased above the upper threshold (over-voltage) or has fallen below the lower threshold (under-voltage). When over-voltage or under-voltage is detected that continues beyond the detection time limit, the voltage relay 128 outputs the gate block signal Sb to the gate circuit 116 within the inverter 104 and outputs the de-parallelizing signal Sr to the grid connection relay 105. Also, upon receiving the setting signal Sd from the relay operation setting device 130, the voltage relay 128 updates the upper and lower thresholds for the voltage value Vₛ of the power system 102, as well as the detection time limit, according to the de-parallelizing condition indicated by the setting signal Sd.

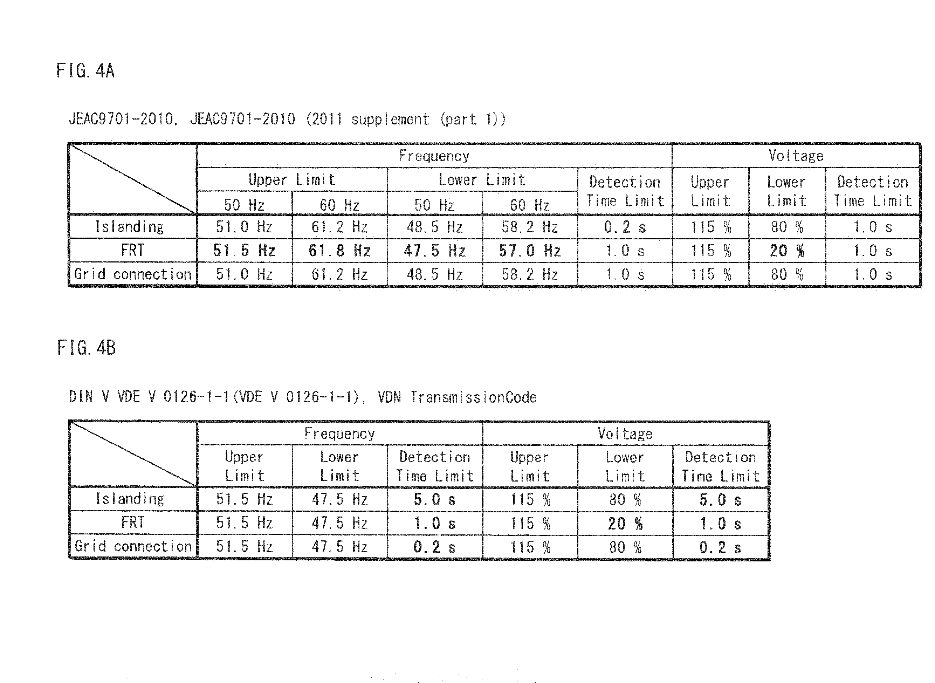

Figs. 4A and 4B indicate examples of the upper threshold, the lower threshold, and the detection time limit respectively corresponding to the islanding condition, the FRT condition, and the grid connection condition as stored in the frequency relay 127 and the voltage relay 128. Fig. 4A gives setting examples confirming to a grid interconnection code (JEAC 970-2010) and to a standard based on the grid interconnection code (JEAC 9710-2010 (2011 supplement (part 1))). Fig. 4B gives setting examples conforming to the DIN V VDE V 0126-1-1(VDE V 0126-1-1) and VDN Transmission Code standards.

### (Relay Operation Setting Device 130)

The relay operation setting device 130 calculate the angular acceleration df/dt of the system voltage, which is the change in system voltage frequency over time for the voltage value Vₛ, and outputs the setting signal Sd that instructs the frequency relay 127 and the voltage relay 128 to change the de-parallelizing conditions. The relay operation setting device 130 includes the frequency detector 121, the angular acceleration calculator 125, and a protection relay setting determiner 126.

The angular acceleration calculator 125 obtains the system voltage frequency fᵥ, from the frequency detector 121, calculates the angular acceleration df/dt, which is the rate of change in fᵥ over time, and outputs the result to the protection relay setting determiner 126.

The protection relay setting determiner 126 uses the angular acceleration df/dt of the system voltage obtained by the angular acceleration calculator 125 to determine which of the islanding condition, the FRT condition. and the grid connection condition should be used for the de-parallelizing condition of the frequency relay 127 and the voltage relay 128, and then outputs the setting signal Sd to the frequency relay 127 and the voltage relay 128. The de-parallelizing conditions each include an upper threshold, a lower threshold, and a detection time limit corresponding to the frequency and voltage.

### (Relay Operation Setting Device 130 Operations)

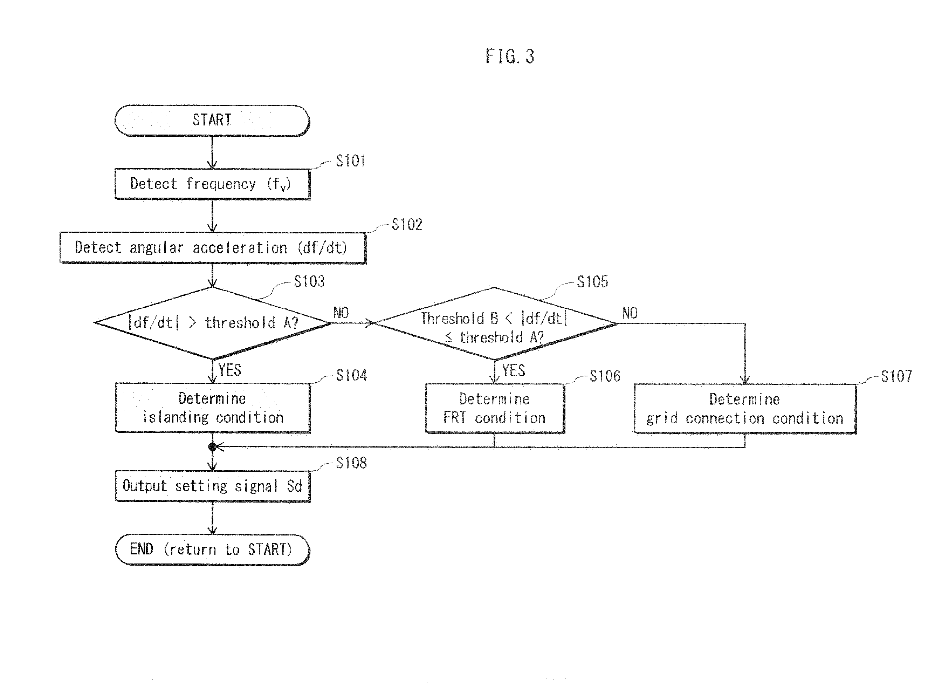

Fig. 3 is a flowchart of operations performed by the relay operation setting device 130 for each A/D conversion cycle.

First, the frequency detector 121 outputs the system voltage frequency fᵥ (S101).

Next, the angular acceleration calculator 125 calculates the angular acceleration df/dt of the system voltage (S102).

The protection relay setting determiner 126 then selects a de-parallelizing condition for the protection relay according to the absolute value of the angular acceleration |dt/dt| of the system voltage. The details are as follows.

The protection relay setting determiner 126 determines whether or not the absolute value of the angular acceleration |df/dt| for the system voltage is greater than a pre-set threshold A (S103). In the present Embodiment, threshold A is 2 Hz/s.

When the absolute value of the angular acceleration |dt/dt| is greater than the threshold A (YES in S103), the protection relay setting determiner 126 determines the islanding condition as the de-parallelizing condition for the protection relay (S104). The islanding condition is a de-parallelizing condition for detecting whether or not the distributed power source 101 is islanding, and swiftly performing de-parallelizing in the affirmative case. As described above, the operations of the phase shift adder 124 are such that the absolute value of the angular acceleration |df/dt| is remarkably large when the distributed power source 101 is islanding. Fluctuations in electric power supply to the power system 102 occur before and after the distributed power source 101 begins islanding. As such, frequency fluctuations occur in the power system 102. Accordingly, the absolute value of the angular acceleration |df/dt| is increased due to the frequency fluctuations when the distributed power source 101 is islanding. Thus, when the absolute value of the angular acceleration |df/dt| is greater than 2 Hz/s, the distributed power source 101 is highly likely to be in transition to islanding.

Conversely, when the absolute value of the angular acceleration |df/dt| is equal to or less than threshold A (NO in S103), the protection relay setting determiner 126 determines whether or not the absolute value of the angular acceleration |df/dt| is greater than threshold B (S105). In the present Embodiment, threshold B is 0 Hz/s.

When the absolute value of the angular acceleration |df/dt| is equal to or less than threshold A and is greater than threshold B (YES in S105), the protection relay setting determiner 126 determines the FRT condition as the de-parallelizing condition for the protection relay (S106). The FRT condition is a de-parallelizing condition for not de-parallelizing the distributed power source 101 provided that disturbances in the system voltage and voltage frequency of the power system remain within a predetermined range. The reasoning here is that when the absolute value of the angular acceleration |df/dt| is within the predetermined range, the fluctuations of the voltage and frequency are likely to satisfy the FRT condition.

When the absolute value of the angular acceleration |df/dt| is equal to or less than threshold B (NO in step S105), the protection relay setting determiner 126 determines the grid connection condition as the de-parallelizing condition for the protection relay (S107). The grid connection condition is a de-parallelizing condition for de-parallelizing the distributed power source 101 upon detecting a malfunction in the system voltage or frequency of the power system 102 or when a malfunction occurs in the output voltage or frequency of the power conditioner 100. The grid connection condition is a condition for detecting a malfunction in the power system 102 when not in the islanding condition or the FRT condition. The reasoning is that although the system voltage frequency fᵥ is expected to be mostly stable when the absolute value of the angular acceleration |df/dt| is small, there should nevertheless be a setting for de-parallelizing the distributed power source 101 when a malfunction occurs in the power system 102 or in the power conditioner 100.

Lastly, the protection relay setting determiner 126 outputs the setting signal Sd indicating the determined de-parallelizing condition for the protection relay to the frequency relay 127 and the voltage relay 128 (S108).

The relay operation setting device 130 begins the process from S101 at the next A/D conversion cycle. That is, the relay operation setting device 130 executes steps S101 through S108 for every A/D conversion cycle.

### (Relay Operation Setting Device 130 Operation Example 1)

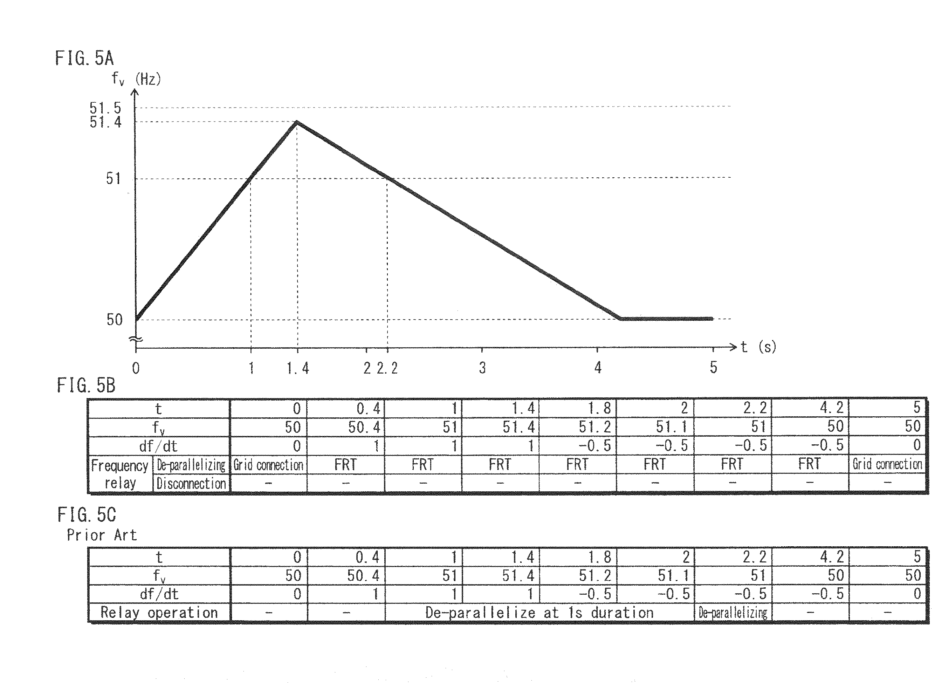

Figs. 5A through 5C illustrate the protection relay settings and operations of a distributed power source system pertaining the present Embodiment when fluctuations occur in the system voltage frequency. Here, the base frequency f_{S} of the system voltage is 50 Hz. The de-parallelizing conditions are as given in Fig. 4A using the base frequency of 50 Hz.

Fig. 5A illustrates the fluctuations in the system voltage frequency fᵥ over time *t* from 0s to 5s. Fig. 5B indicates the de-parallelizing condition for the frequency relay 127 in the distributed power source system pertaining to the present Embodiment. Fig. 5C indicates operations when the de-parallelizing condition for the frequency relay is fixed in the grid connection condition, and represents the operations of a protection relay in a conventional distributed power source system.

The de-parallelizing condition for the frequency relay 127 in the distributed power source system pertaining to the present Embodiment is explained with reference to Fig. 5B. At time *t* = 0, the frequency fluctuations have not yet occurred, so |df/dt| is zero. As such, the relay operation setting device 130 determines the grid connection condition as the de-parallelizing condition for the protection relay. Here, the system voltage frequency fᵥ is no lower than the lower threshold of 48.5 Hz and no higher than the upper threshold of 51.0 Hz, such that the frequency relay 127 does not perform de-parallelizing.

From time *t* or 0s to 1.4s, |df/dt| is 1 Hzs. Thus, the relay operation setting device 130 determines the FRT condition as the de-parallelizing condition for the protection relay. Here, the upper threshold for the frequency relay 127 is 51.5 Hz, and the system voltage frequency fᵥ is no more than 51.4 Hz. Thus, no frequency increase is detected, and the frequency relay 127 does not perform de-parallelizing.

Next. from time *t* of 1.4s to 4.2s, |df/dt| is 0.5 Hz/s. Thus, the relay operation setting device 130 determines the FRT condition as the de-parallelizing condition for the protection relay. Here, the upper threshold for the frequency relay 127 is 51.5 Hz, and the system voltage frequency fᵥ is no more than 51.4 Hz. Thus, no frequency increase is detected, and the frequency relay 127 does not perform de-parallelizing.

Then, from time *t* of 4.2s to 5.0s, |df/dt| is 0 Hz/s. Thus, the relay operation setting device 130 determines the grid connection condition as the de-parallelizing condition for the protection relay. Here, the system voltage frequency fᵥ is 50 Hz. Thus, no frequency increase or decrease is detected, and the frequency relay 127 does not perform de-parallelizing.

In contrast, the operations of the conventional distributed system when the de-parallelizing condition of the frequency relay 127 is fixed as the grid connection condition are described with reference to Fig. 5C. Here, from time *t* of 0s to 1.0s, the system voltage frequency fᵥ is no lower than the lower threshold of 48.5 Hz and no higher than the upper threshold of 51.0 Hz, such that the frequency relay 127 does not perform de-parallelizing.

However, after time *t* of 1.0s, the system voltage frequency fᵥ increases beyond the upper threshold 51.0 Hz. Thus, the frequency relay 127 detects a frequency increase. Further, for the next 1.2 seconds until time *t* of 2.2s, the system voltage frequency fᵥ is greater than the upper threshold of 51.0 Hz. The detection time limit is 1.0s. Thus, the frequency relay 127 continues to detect the frequency increase for 1.0 seconds beginning at the initial detection, i.e., from time *t* 1.0s to 2.0s. The gate block signal Sb and the de-parallelizing signal Sr are output after time *t* of 2.0.

As a result, unlike the frequency relay 127 of the distributed power source system pertaining to the present Embodiment, which does not perform de-parallelizing in response to the frequency fluctuations of Fig. 5A, the conventional distributed power source system does perform de-parallelising and may thus unnecessarily constrain parallelizing.

When the system voltage frequency fᵥ continues to increase after time t of 1.4s, then the frequency relay 127 transmits the gate block signal Sb and the de-parallelizing signal Sr one second after the system voltage frequency fᵥ exceeds 51.5 Hz. Thus, when a malfunction that should result in de-parallelizing the distributed power source 101 occurs, that malfunction is detected and the distributed power source 101 is de-parallelized.

### (Relay Operation Setting Device 130 Operation Example 2)

The following describes an example of a situation where the base frequency of the system voltage is 50 Hz and the system voltage frequency increases step-wise to 50.8 Hz in only three cycles.

The de-parallelizing condition for the frequency relay 127 in the distributed power source system pertaining to the present Embodiment is explained here. When a step-wise increase in frequency occurs, the absolute value of the angular acceleration |df/dt| is extremely large, for instance 160 Hz/s when the step-wise increase lasts 1/4 cycle. Thus, the relay operation setting device 130 determines the islanding condition for the de-parallelizing condition of the protection relay. However, the system voltage frequency fᵥ is no more than the upper threshold of 51.0Hz. As such, the frequency relay 127 does not perform de-parallelizing.

Then, the absolute value of the angular acceleration |df/dt| is zero while the system voltage frequency fᵥ is 50.8 Hz. Thus, the relay operation setting device 130 determines the grid connection condition as the de-parallelizing condition for the protection relay. Here, the system voltage frequency fᵥ is no higher than the upper threshold of 51.0 Hz, such that the frequency relay 127 does not perform de-parallelizing.

Afterward, when the system voltage frequency returns to 50Hz, the absolute value of the angular acceleration |df/dt| is again extremely large. Thus, the relay operation setting device 130 determines the islanding condition as the de-parallelizing condition for the protection relay. However, the system voltage frequency fᵥ is no more than the upper threshold of 51.0 Hz. As such, the frequency relay 127 does not perform de-parallelizing.

Lastly, the absolute value of the angular acceleration |df/dt| is zero after the system voltage frequency fᵥ has returned to 50 Hz. Thus, the relay operation setting device 130 determines the grid connection condition as the de-parallelizing condition for the protection relay. Here, the system voltage frequency fᵥ is no higher than the upper threshold of 51.0 Hz, such that the frequency relay 127 does not perform de-parallelizing.

As a result, the relay operation setting device 130 of the distributed power source system pertaining to the present Embodiment changes the de-parallelizing condition for the frequency relay 127 to the islanding condition only for the instant of the step increase or step decrease. However, the system voltage frequency fᵥ never satisfies the de-parallelizing condition, such that the frequency relay 127 does not perform de-parallelising. Accordingly, although an islanding detection device basing the islanding determination solely on the absolute value of the angular acceleration |df/dt| may erroneously detect islanding when a step increase or step decrease occurs and thus unnecessarily de-parallelise the distributed power source, the distributed power source system of the present Embodiment is able to constrain such unnecessary de-parallelization.

### <Summary>

As described above, in the present Embodiment, the absolute value of the angular acceleration |df/dt| of the power system 102 is used to switch the upper threshold and lower threshold (i.e., setting values) as well as the detection time limit in the frequency relay 127 and the voltage relay 128.

The islanding detection method based on the frequency of the power system 102 alone may misidentify a disturbance in the system that satisfies the FRT condition as islanding, leading to a problem of unnecessary de-parallelizing. However, the method of determining whether or not a fluctuation in the voltage value or voltage frequency satisfies the FRT condition after detecting the islanding does not misidentify a system disturbance as islanding. Thus, when the distributed power source begins islanding, the distributed power source is not de-parallelized until a determination is made to the effect that the FRT condition is not satisfied. As a result, early de-parallelizing does not occur. That said, the present Embodiment switches the de-parallelizing condition of the protection relay using the absolute value of the angular acceleration |df/dt|, thereby enabling swift de-parallelizing when the distributed power source begins islanding while also constraining unnecessary de-parallelization.

### (Embodiment 2)

In Embodiment 1, only the absolute value of the angular acceleration |df/dt| is used to set the de-parallelizing condition of the protection relay.

In the present Embodiment, a configuration is described in which frequency deviation and phase properties (i.e., reactive power properties) of the phase shift adder are used to improve the islanding condition determination odds used in islanding of the distributed power source as the de-parallelizing condition for the protection relay as set by the protection relay setting determiner 126.

### <Configuration>

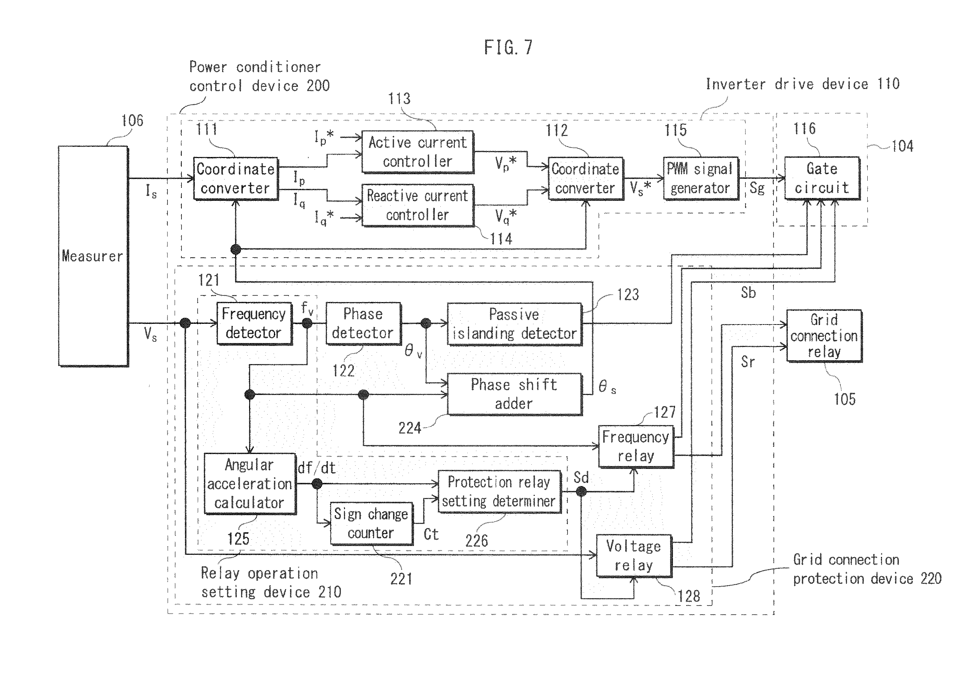

Fig. 7 is a block diagram illustrating the configuration of a power conditioner control device 200 pertaining to Embodiment 2. Components configured identically to Embodiment 1 use the same reference numbers, and explanations of such components are omitted.

The power conditioner control device 200 is configured identically to the power conditioner control device 107 of Embodiment 1, with the exception of the grid connection protection device 120 which is replaced by a grid connection protection device 220. The grid connection protection device 220 is configured identically to the grid connection protection device 120 of Embodiment 1, with the exception of the phase shift adder 124 and the relay operation setting device 130, which are respectively replaced by a phase shift adder 224 and a relay operation setting device 210.

The relay operation setting device 210 is, in turn, configured identically to the relay operation setting device 130 with the exception of the protection relay setting determiner 126 being replaced by a protection relay setting determiner 226 and the addition of a sign change counter 221.

The sign change counter 221 acquires the angular acceleration df/dt from the angular acceleration calculator 125 and counts the number of changes in the sign (i.e., between positive and negative values) of the angular acceleration df/dt. The sign change counter 221 also regularly outputs a count value Ct and resets the count value Ct to zero. In the present Embodiment, the count value Ct is output and reset every system voltage cycle, for instance every 0.02s for a system voltage frequency of 50 Hz.

The protection relay setting determiner 226 determines the de-parallelizing condition for the frequency relay 127 and the voltage relay 128 according to the absolute value of the angular acceleration |df/dt| and the count value Ct. The de-parallelizing condition thus determined is output as the setting signal using operations identical to those of the protection relay setting determiner 126 from Embodiment 1. The protection relay setting determiner 226 determines the de-parallelizing condition for the frequency relay 127 and the voltage relay 128 and outputs the setting signal Sd not at each cycle of A/D conversion, but rather every instance of count value Ct output, i.e., each time the count value Ct is reset, which corresponds to one cycle of the system voltage.

The phase shift adder 224 performs a slip mode frequency shift or a frequency feedback, calculates the shifted phase θ_{sft} according to the system voltage frequency deviation Δf and adds the result to the system voltage phase θᵥ, then outputs the resulting output current phase θₛ to the coordinate converters 111 and 112 of the inverter drive device 110 in the same manner as the phase shift adder 124. The phase shift adder 224 is further configured such that the frequency deviation and phase properties have discrete (i.e., discontinuous, step-wise) values. Accordingly, when the distributed power source 101 transitions to islanding, the reactive power supplied by the inverter 104 and the reactive power required by the load 103 are unlikely to match, such that the sign (i.e.. positive or negative) of the angular acceleration df/dt is likely to change. The details are described below.

### (Phase Shift Adder 224 Operations)

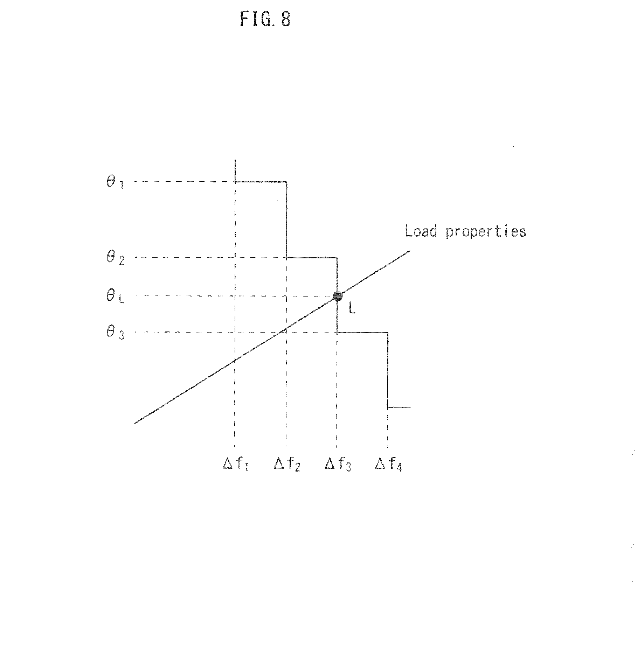

The operations of the phase shift adder 224 are described with reference to Fig. 8.

Fig. 8 shows an expanded view of the portion of Fig.6 encircled by dashed line A, and depicts the intersection of the frequency deviation and phase properties of the phase shift adder 224 intersect the load properties of the load 103.

As shown, there is a difference (phase difference) of θ_{L} between and the current phase and the voltage phase, corresponding to the reactive power required by the load 103 at frequency deviation Δf₃. Also, the frequency deviation and phase properties of the phase shift adder 224 are such that there is a phase shift of θ₁ for frequency deviations of Δf₁ to Δf₂, a phase shift of θ₂ for frequency deviations of Δf₂ to Δf₃, and a phase shift of θ₃ for frequency deviations of Δf₃ to Δf₄. That is, the phase shift θ_{sft} is a discontinuous value.

Accordingly, when the frequency deviation and phase properties of the phase shift adder 224 match the load properties of the load 103, there is no combination of frequency deviation and phase shift. That is, the inverter 104 is not able to supply the reactive power required by the load 103 in just proportion. Thus, when the distributed power source 101 begins islanding, the phase shift adder 224 attempts to adequately supply the reactive power required by the load 103, causing the phase shift θ_{sft} to repeatedly alternate between increase and decrease about the midpoint of θ_{L}, such that the frequency deviation Δf also repeatedly increases and decreases about Δf₃.

The following describes details of the frequency fluctuations occurring when the distributed power source 101 transitions from a grid-connected state to islanding. As described above, when the distributed power source 101 is islanding, the inverter 104 must supply the reactive power required by the load 103. Thus, the voltage frequency of the output voltage from the inverter 104 increases or decreases relative to base frequency fₛ, as the inverter 104 supplies reactive power in response to the frequency deviation Δf. Fig. 8 represents a situation where the voltage frequency of the output voltage from the inverter 104 increases and the load properties of the load 103 intersect the frequency deviation and phase properties of the phase shift adder 224, i.e., when the load 103 is leading the power factor load.

Once the voltage frequency of the output voltage from the inverter 104 increases and frequency deviation Δf grows, the shifted phase θ_{sft} changes accordingly. As the frequency deviation Δf transitions from the range of Δf₁ to Δf₂ to the range of Δf₂ to Δf₃, the shifted phase changes from θ₁ to θ₂. Given that θ₂ > θ_{L}, the reactive power supplied by the inverter 104 when frequency deviation Δt is the range of Δf₂ to Δf₃ increases beyond the reactive power required by the load 103. Thus, in order to reduce the reactive power supplied by the inverter 104, the frequency fᵥ is further increased and the frequency deviation Δf grows larger.

However, the phase shift θ_{sft} is a discontinuous value, and thus cannot take a value matching θ_{L}. Accordingly, as the frequency deviation Δf transitions into the range of Δf₃ to Δf₄, the shifted phase θ_{sft} changes from θ₂ to θ₃, thereby exceeding θ_{L}. Given that θ₃ < θ_{L}, the reactive power supplied by the inverter 104 when frequency deviation Δf is the range of Δf₃ to Δf₄ decreases below the reactive power required by the load 103. Thus, in order to increase the reactive power supplied by the inverter 104, the frequency fᵥ is decreased and the frequency deviation Δf grows smaller.

However, the phase shift θ_{sft} is a discontinuous value, and thus cannot take a value matching θ_{L}. Accordingly, as the frequency deviation Δf transitions into the range of Δf₂ to Δf₃, the shifted phase θ_{sft} changes from θ₃ to θ₂, thereby exceeding θ_{L}.

Subsequently, the frequency deviation Δf repeatedly alternates between increasing from the range of Δf₂ to Δf₃ and decreasing from the range of Δf₃ to Δf₄, such that the sign of df/dt alternates between being positive and being negative.

As described above, the frequency deviation and phase properties of the phase shift adder 224 are discrete (i.e., discontinuous, step-wise) values. Thus, the reactive power supplied by the inverter 104 when the distributed power source 101 is islanding alternates between over- and under-supply relative to the reactive power required by the load 103. Therefore, estimation can be made given that there is a strong possibility that when the angular acceleration df/dt alternates in sign (i.e., between being positive and being negative), the distributed power source 101 is islanding.

### (Relay Operation Setting Device 210 Operations)

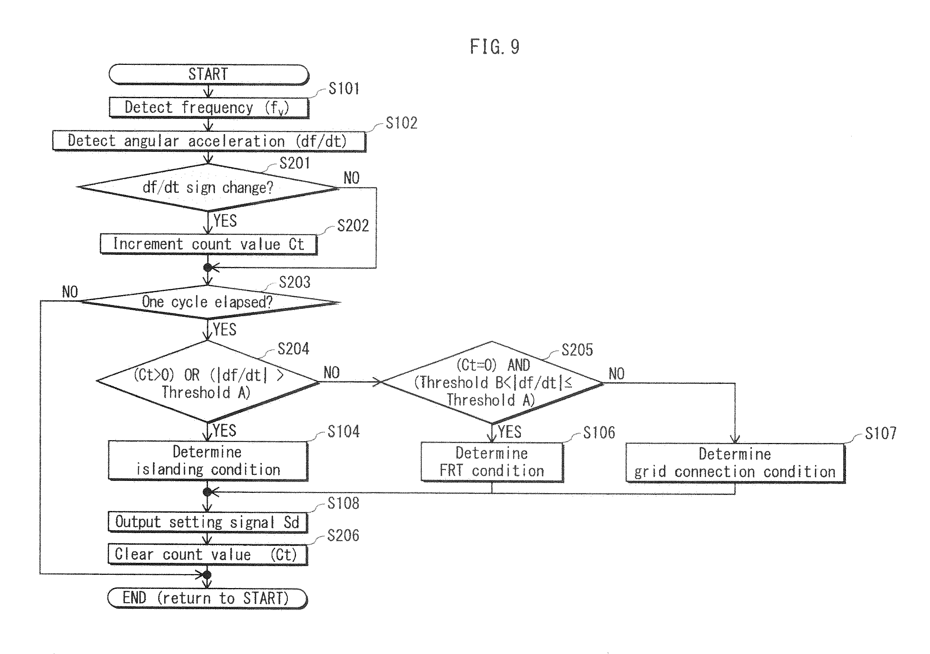

Fig. 9 is a flowchart of operations performed by the relay operation setting device 210 for each A/D conversion cycle, pertaining to Embodiment 2. Steps identical to those of Embodiment 1 use the same reference numbers, and detailed explanations of such steps are omitted.

First, the frequency detector 121 outputs the system voltage frequency (S101). Next, the angular acceleration calculator 125 calculates the angular acceleration (S102).

Next, the sign change counter 221 determines whether the sign of the angular acceleration df/dt is the same as the sign of the angular acceleration df/dt in the previous A/D conversion period. When the result is that the sign of the angular acceleration df/dt has changed (i.e., the signs do not match), the value of the stored count value Ct is increased by one (S202).

The sign change counter 221 then clears the previous count value Ct and determines whether or not one system voltage cycle has elapsed (S203). When one system voltage cycle has not elapsed since clearing the previous count value Ct (NO in S203), the relay operation setting device 210 ends the processing current A/D conversion cycle and restarts the process from S101 for the next cycle.

However, when the determination results are such that one system voltage cycle has elapsed since clearing the previous count value Ct (YES in S203), the sign change counter 221 outputs the count value Ct to the protection relay setting determiner 226. The protection relay setting determiner 226 then determines whether or not the count value Ct is greater than zero, and whether or not the absolute value of the angular acceleration |df/dt| exceeds threshold A (S204).

When the count value Ct is greater than zero, or the absolute value of the angular acceleration |df/dt| exceeds threshold A (YES in S204), the protection relay setting determiner 226 determines the islanding condition as the de-parallelizing condition for the frequency relay 127 and the voltage relay 128 (S104). As described above, when the count value is greater than zero, the distributed power source 101 may possibly be islanding.

However, when the count value Ct is zero and the absolute value of the angular acceleration |df/dt| is equal to or less than threshold A (NO in S204), the protection relay setting determiner 226 determines whether or not the absolute value of the angular acceleration |df/dt| exceeds threshold B (S205).

When the absolute value of the angular acceleration |df/dt| is equal to or less than threshold A and exceeds threshold B (YES in S205), the protection relay setting determiner 226 determines the FRT condition as the de-parallelizing condition for the frequency relay 127 and the voltage relay 128 (S106). Also, when the absolute value of the angular acceleration |dt/dt| is equal to or less than threshold B (NO in S205), the protection relay setting determiner 226 determines the grid connection condition as the de-parallelizing condition for the frequency relay 127 and the voltage relay 128 (S107).

The protection relay setting determiner 226 outputs the de-parallelizing conditions thus determined for the frequency relay 127 and the voltage relay 128 as the setting signal Sd (S108).

Lastly, the sign change counter 221 clears the count value Ct (S206). The relay operation setting device 210 begins the process from S101 at the next A/D conversion cycle.

### <Summary>

As described above, in the present Embodiment, the frequency deviation and phase properties of the phase shift adder 224 are set to be discrete, such that the sign of the angular acceleration df/dt alternates between being positive and being negative when the distributed power source 101 is islanding.

The protection relay setting determiner 226 is then able to set the de-parallelizing condition for the protection relay more accurately by using the change in de-parallelizing condition of the protection relay based on absolute value of the angular acceleration |df/dt| and a change in sign of the angular acceleration. This enables certain de-parallelizing when islanding occurs, while also constraining unnecessary de-parallelizing.

### (Embodiment 3)

In Embodiment 2, the phase shift adder 224 is configured such that the frequency deviation and phase properties have discrete (i.e., discontinuous, step-wise) values.

In the present Embodiment, the spacing is modified of the discrete values of the frequency deviation and phase properties for the phase shift adder, in a range between the intersection with the load properties and the vicinity of the base frequency.

### <Configuration>

The power conditioner control device pertaining to the present Embodiment is configured identically to the power conditioner control device 200 of Embodiment 2 with the exception of the frequency deviation and phase properties for the phase shift adder. The frequency deviation and phase properties for the phase shift adder pertaining to the present Embodiment are described below.

### (Phase Shift Adder)

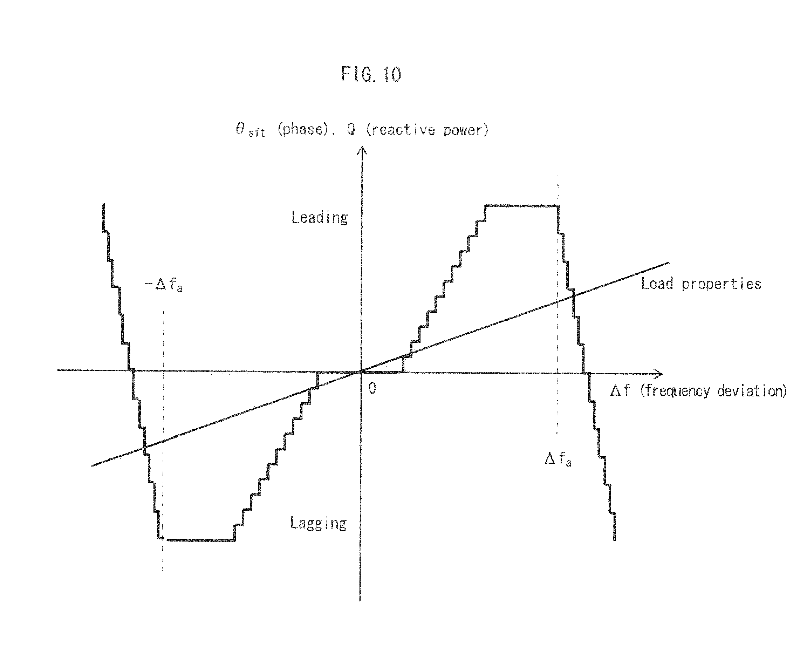

The frequency deviation and phase properties for the phase shift adder pertaining to the present Embodiment are described below, with reference to Fig. 10.

The frequency deviation and phase properties for the phase shift adder are as described below. When the absolute value of the frequency deviation Δf is smaller than Δfₐ (i.e., when -Δfₐ < Δf < Δfₐ), the discrete values of θ_{sft} have small spacing, and when the absolute value of frequency deviation Δf is equal to or greater than Δfₐ (i.e., when Δf ≤ -Δfₐ or Δf ≥ Δfₐ), the discrete values of θ_{sft} have large spacing.

Accordingly, when the load properties of the load 103 intersect the frequency deviation and phase properties for the phase shift adder, and the absolute value of the frequency deviation Δf is equal to or greater than Δfₐ (i.e., when Δf ≤ -Δfₐ or Δf ≥ Δfₐ), the spacing between possible values of θ_{sft} is large and the resolution of the reactive power supplied by the inverter 104 is decreased. Thus, when the distributed power source 101 begins islanding, the reactive power supplied by the inverter 104 and the reactive power required by the load 103 are less likely to match, which makes the sign of the angular acceleration df/dt more likely to vary.

Also, when the absolute value of the frequency deviation Δf is smaller then Δfₐ(i.e., when -Δfₐ < Δf< Δfₐ), the spacing between possible values of θ_{sft} is small. Thus, the inverter 104 supples the reactive power despite the occurrence frequency fluctuations other than islanding, such as a temporary fluctuation in the system voltage frequency. Thus, more reactive power is supplied when a large value of θ_{sft} is used for a small frequency deviation Δf, and the power factor of the inverter 104 decreases.

### <Summary>

As described above, in the present Embodiment, the frequency deviation and phase properties for the phase shift adder are such that when the absolute value of the frequency deviation Δf is smaller than Δfₐ (i.e., when -Δfₐ < Δf < Δfₐ), the discrete values of θ_{sft} have small spacing, and when the absolute value of frequency deviation Δf is equal to or greater than Δfₐ (i.e., when Δf ≤ -Δfₐ or Δf ≥ Δfₐ), the discrete values of θ_{sft} have large spacing. According to this configuration, the frequency deviation and phase properties are less likely to match the load properties when the distributed power source 101 is islanding and the angular acceleration undergoes a greater change. Thus, the de-parallelizing condition for the protection relay is settable with greater accuracy in comparison to Embodiment 2, which enables certain de-parallelizing when islanding occurs, while also constraining unnecessary de-parallelizing.

### (Other Variations of Embodiments)

(1) In Embodiments 1-3, the frequency relay 127 and the voltage relay 128 are described as transmitting the gate block signal Sb as well as the de-parallelizing signal Sr. However, no such limitation is intended. For example, frequency relay 127 may transmit the gate block signal Sb only when the FRT condition or the grid connection condition is set and the frequency increase is detected for at least as long as the detection time limit. The distributed power source 101 is de-parallelized upon performing the gate block of the inverter 104 despite the grid connection relay 105 remaining closed. Thus, this configuration enables simple recovery operations to be performed when the distributed power source 101 is de-parallelized by temporary trouble with the power system 102.

The matter of whether the frequency relay 127 and the voltage relay 128 transmit only the gate block signal Sb or transmit the gate block signal Sb as well as the de-parallelizing signal Sr may be determined separately for each of the islanding condition, the FRT condition, and the grid connection condition, or may be determined separately for each voltage setting value (i.e., upper threshold and lower threshold) and frequency setting value. Also, the determination may be made separately for the upper frequency threshold and the frequency lower threshold.
(2) In Embodiments 1-3, the protection relay setting determiners 126 and 226 are described as outputting, to the frequency relay 127 and the voltage relay 128, the setting signal Sd that indicates one of a plurality of de-parallelizing conditions stored by the frequency relay 127 and the voltage relay 128. However, no such limitation is intended. For instance, the protection relay setting determiners 126 and 226 may output a frequency setting value and a detection time limit to the frequency relay 127 as the setting signal Sd. Also, the detection time limit may use an individual value distinct from the upper frequency threshold and lower frequency threshold, and may include information indicating the presence of the de-parallelizing signal Sr as described above. The protection relay setting determiners 126 and 226 may, of course, output the same information to the voltage relay 128.

In addition, the protection relay setting determiners 126 and 226 may output the setting signal Sd only in cases where the de-parallelizing condition of the frequency relay 127 and the voltage relay 128 requires a change. Further, when the setting signal Sd includes a setting value or a detection time limit as described above, the protection relay setting determiners 126 and 226 may transmit, as the setting signal Sd, only the values requiring a change from the de-parallelizing conditions of the frequency relay 127 and the voltage relay 128.
(3) In Embodiments 1-3, the thresholds A and B used by the protection relay setting determiners 126 and 226 are described as being 2 Hz/s and 0 Hz/s, respectively. However, no such limitation is intended. Threshold A may be any value enabling a state of islanding by the distributed power source 101 to be distinguished from a state satisfying FRT conditions. Likewise, threshold B may be any value enabling a state of stable operation by the power system 102 to be distinguished from a disturbance in the power system 102, such as 0.1 Hz/s.
(4) In Embodiments 1-3, the power conditioner control devices 107 and 200 are described as performing A/D conversion on the system voltage value Vₛ and the output current value Iₛ using a predetermined frequency of 17.5 kHz, and as performing each described process on the resulting digital signal for each cycle of A/D conversion. However, no such limitation is intended. The frequency for A/D conversion may be any frequency enabling frequency detection and phase detection of the voltage frequency, as well as current value coordinate conversion, and enabling de-parallelizing within the de-parallelizing time limit when the distributed power source 101 begins islanding, such as 20 kHz.
(5) In Embodiments 1-3, the grid connection protection devices 120 and 220 are described as sharing the frequency detector 121 with the respective relay operation setting devices 130 and 210. However, no such limitation is intended. For instance, the grid connection protection device 120 and the relay operation setting device 130 may each include a separate frequency detector.

Also, the inverter drive device 110 is described as obtaining the voltage phase from the phase shift adders 124 and 224. However, the inverter drive device 110 may also include a phase detector detecting the voltage phase. In such a case, the Embodiments are realised by providing the inverter drive device 110 with an adder that adds a phase shift θ_{sft} output from the phase shift adder 124 to the voltage phase detected by the phase detector, and outputs the result to the coordinate converters 111 and 112. Also, the method of adding the shifted phase value θ_{sft} to the voltage phase is not limited to having the inverter drive device 110 include an adder that performs addition with the voltage phase detected by the phase detector. Instead, a method may be used where the values of the active current command value Iₚ^{*} and the reactive current command value I_{q}^{*} are changed according to the shift phase value θ_{sft}
(6) In Embodiments 2 and 3, the protection relay setting determiner 226 is described as setting the islanding condition for the frequency relay 127 and the voltage relay 128 when the count value Ct is not zero for one cycle of system voltage However, no such limitation is intended. For example, the sign change counter 221 may reset the count value Ct every 0.1 s, and the protection relay setting determiner 226 may set the islanding condition for the frequency relay 127 and the voltage relay 128 when the count value Ct is equal to or greater than six. Also, the sign change counter 221 may be configured not to count a change in sign of the angular acceleration df/dt when the absolute value of the angular acceleration |df/dt| is equal to or less than a predetermined value. This configuration enables the de-parallelizing condition for the frequency relay 127 and the voltage relay 128 to be set to the islanding condition without problem when the system voltage frequency of the power system only undergoes minor fluctuations.
(7) In Embodiments 1-3, the passive islanding detector 123 is described as detecting a voltage phase jump in the system voltage phase θᵥ. However, no such limitation is intended. For example, a frequency change ratio or tertiary higher harmonic change ratio may be detected, and islanding may be detected using a given passive islanding detection method. Also, the passive islanding detector 123 may detect islanding using a plurality of passive islanding detection methods.
(8) In Embodiments 1-3, the inverter 104 is described as having a power factor of one. However, no such limitation is intended. The inverter 104 may have any power factor within a range suited to the grid connection specifications and so on, such as 95%. The active current command value Iₚ^{*} and the reactive current command value I_{q}^{*} are also not limited to Iₑ and zero, respectively.
(9) In Embodiments 1-3, each of the relay operation setting device, the grid connection protection device, the inverter drive device, and the power conditioner control device may be realised as a Large Scale Integration (hereinafter, LSI). Each circuit may be realised on an individual chip, or a single chip may include all or a subset of the circuits. For example, the relay operation setting device may be realised as the same integrated circuit as the grid connection protection device while other integrated circuits remain separate.

Although LSI is named above, the terms Integrated Circuit (also termed IC), system LSI, super LSI, and ultra LSI may also be used according to the degree of integration.

Also, the circuit integration method is not limited to LSI and may alternatively be realized through a dedicated circuit or a general processor. After LSI assembly, a FPGA (Field Programmable Gate Array) or reconfigurable processor may be used.

Furthermore, should progress in the field of semiconductors or emerging technologies lead to replacement of LSI with other integrated circuit schemes, then such technology may of course be used.
(10) No limitation is intended to the descriptions given in Embodiments 1-3. Various improvements and modifications may also be applied, provided that these do not exceed the scope of the disclosure.

### (Supplement)

The following describes aspects of a relay operation setting device, power conditioner, and distributed power source system, as well as a relay operation setting method, along with results thereof, pertaining to the present disclosure.
(1) In one aspect, a relay operation setting device setting a de-parallelizing condition for a protection relay that controls de-parallelizing of a distributed power source from a power system, the relay operation setting device comprising: a frequency detector detecting a frequency of a system voltage in the power system; an angular acceleration calculator calculating an angular acceleration of the system voltage according to the frequency; and a protection relay setting determiner determining, in accordance with the angular acceleration, whether or not the de-parallelizing condition for the protection relay is a fault ride through condition in which the distributed power source is not de-parallelized when the fault ride through condition is satisfied during a fault of the power system.

In another aspect, a power conditioner comprises: an inverter converting direct-current power generated by a distributed power source into alternating-current power; an inverter drive device driving the inverter; a protection relay controlling disconnection in a power system of the inverter; a frequency detector detecting a frequency of a system voltage in the power system; an angular acceleration calculator calculating an angular acceleration of the system voltage according to the frequency; and a protection relay setting determiner determining, in accordance with the angular acceleration, whether or not the de-parallelizing condition for the protection relay is a fault ride through condition in which the distributed power source is not de-parallelized when the fault ride through condition is satisfied during a fault of the power system.

In a further aspect, a relay operation setting method setting a de-parallelizing condition for a protection relay that controls de-parallelizing of a distributed power source from a power system, the relay operation setting method comprising: detecting a frequency of a system voltage in the power system; calculating an angular acceleration of the system voltage according to the frequency; and determining, in accordance with the angular acceleration, whether or not the de-parallelizing condition for the protection relay is a fault ride through condition in which the distributed power source is not de-parallelized when the fault ride through condition is satisfied during a fault of the power system.

According to this configuration, a change in system voltage frequency over time is used as index for changing a de-parallelizing condition of the protection relay to an FRT condition such that when necessary, de-parallelizing does not occur when the FRT condition is satisfied. This enables unnecessary de-parallelizing of the distributed power source to be constrained when the FRT condition is satisfied.
(2) Also, in a relay operation setting device, the protection relay setting determiner determines that the de-parallelizing condition for the protection relay is the fault ride through condition when the angular acceleration is calculated as having an absolute value within a predetermined range.

In addition, in a power conditioner, the protection relay setting determiner determines the fault ride through condition as the de-parallelizing condition for the protection relay when the angular acceleration has an absolute value that is within a predetermined range.

According to this configuration, the absolute value of the change in system voltage frequency over time is used to determine whether or not to switch to using the FRT condition. This enables unnecessary de-parallelizing of the distributed power source to be constrained when the FRT condition is satisfied.
(3) Further, when the de-parallelizing condition for the protection relay is determined as not being the fault ride through condition, the protection relay setting determiner determines one of: an islanding condition in which the distributed power source is de-parallelized from the power system when islanding of the distributed power source is detected; and a grid connection condition in which the distributed power source is de-parallelized from the power system when a malfunction is detected while the distributed power source is connected to the power system, as the de-parallelizing condition for the protection relay, in accordance with the angular acceleration.

According to this configuration, the de-parallelizing condition for the protection relay is switchable between one of three types as needed, namely a islanding condition, an FRT condition, and a grid connection condition. This enables the distributed power source to be de-parallelized upon beginning islanding and enables unnecessary de-parallelizing of the distributed power source to be constrained when the FRT condition is satisfied.
(4) Further still, the power conditioner comprises a phase shift adder setting a phase difference target value for the inverter drive device, with respect to an output current phase of the inverter relative to a system voltage phase, wherein when an absolute value of a difference between the frequency of the power system and a base frequency is within a first range, the phase shift adder discretely changes the phase difference target value in a positive direction as a phase difference value increases and is positive, and discretely changes the phase difference target value in a negative direction as the phase difference value increases in absolute value and is negative, when the absolute value of the difference between the frequency of the power system and the base frequency is within a second range that is greater than the first range, the phase shift adder discretely changes the phase difference target value in the negative direction as the phase difference value increases and is positive, and discretely changes the phase difference target value in the positive direction as the phase difference value increases in absolute value and is negative, and when the angular acceleration changes sign within a predetermined time period, the protection relay setting determiner determines the islanding condition as the de-parallelizing condition for the protection relay.

According to this configuration, a sign change of the angular acceleration is used to reliably determine whether or not the de-parallelizing condition for the protection relay should be set to the islanding condition. This enables the de-parallelizing condition for the protection relay to be reliably set, the distributed power source to be reliably de-parallelized upon beginning islanding, and constrains unnecessary de-parallelizing.
(5) Additionally, when the angular acceleration does not change sign within the predetermined period and an angular acceleration absolute value is within a predetermined range, the protection relay setting determiner determines the fault ride through condition as the de-parallelizing condition for the protection relay.

According to this configuration, the sign change is used along with the absolute value of the angular acceleration to more reliably determine whether or not the de-parallelizing condition for the protection relay should be set to the islanding condition.
(6) Alternatively, the phase difference target values in the second range may be discrete with wider spacing than the phase difference target values in the first range.

According to this configuration, the angular acceleration is more likely to change sign when the distributed power source begins islanding. This enables more reliable de-parallelizing when the distributed power source begins islanding and also constrains unnecessary de-parallelizing at other times.

### [Industrial Applicability]

The relay operation setting device of the disclosure is applicable to a distributed power source linked to a power system, and so on.

### [Reference Signs List]

- 100: Power conditioner
- 101: Distributed power source
- 102: Power system
- 103: Load
- 104: Inverter
- 105: Grid connection relay
- 106: Measurer
- 107, 200: Power conditioner control device
- 110: Inverter drive device
- 120, 220: Grid connection protection device
- 130, 210: Relay operation setting device
- 111, 112: Coordinate converter
- 113: Active current controller
- 114: Reactive current controller
- 115: PWM signal generator
- 116: Gate circuit
- 121: Frequency detector
- 122: Phase detector
- 123: Passive islanding detector
- 124, 224: Phase shift adder
- 125: Angular acceleration calculator
- 126, 226: Protection relay setting determiner
- 127: Frequency relay
- 128: Voltage relay
- 221: Sign change counter

## Claims

1. A relay operation setting device setting a de-parallelizing condition for a protection relay that controls de-parallelizing of a distributed power source from a power system, the relay operation setting device comprising:
a frequency detector detecting a frequency of a system voltage in the power system;
an angular acceleration calculator calculating an angular acceleration of the system voltage according to the frequency; and
a protection relay setting determiner determining, in accordance with the angular acceleration, whether or not the de-parallelizing condition for the protection relay is a fault ride through condition in which the distributed power source is not de-parallelized when the fault ride through condition is satisfied during a fault of the power system.

2. The relay operation setting device of Claim 1, wherein
the protection relay setting determiner determines that the de-parallelizing condition for the protection relay is the fault ride through condition when the angular acceleration is calculated as having an absolute value within a predetermined range.

3. The relay operation setting device of Claim 1, wherein
when the de-parallelizing condition for the protection relay is determined as not being the fault ride through condition, the protection relay setting determiner determines one of:
an islanding condition in which the distributed power source is de-parallelized from the power system when islanding of the distributed power source is detected; and
a grid connection condition in which the distributed power source is de-parallelized from the power system when a malfunction is detected while the distributed power source is connected to the power system,
as the de-parallelizing condition for the protection relay, in accordance with the angular acceleration.

4. A power conditioner, comprising:
an inverter converting direct-current power generated by a distributed power source into alternating-current power;
an inverter drive device driving the inverter;
a protection relay controlling disconnection in a power system of the inverter;
a frequency detector detecting a frequency of a system voltage in the power system;
an angular acceleration calculator calculating an angular acceleration of the system voltage according to the frequency; and
a protection relay setting determiner determining, in accordance with the angular acceleration, whether or not the de-parallelizing condition for the protection relay is a fault ride through condition in which the distributed power source is not de-parallelized when the fault ride through condition is satisfied during a fault of the power system.

5. The power conditioner of Claim 4, wherein
the protection relay setting determiner determines the fault ride through condition as the de-parallelizing condition for the protection relay when the angular acceleration has an absolute value that is within a predetermined range.

6. The power conditioner of Claim 4, further comprising a phase shift adder setting a phase difference target value for the inverter drive device, with respect to an output current phase of the inverter relative to a system voltage phase, wherein
when an absolute value of a difference between the frequency of the power system and a base frequency is within a first range, the phase shift adder discretely changes the phase difference target value in a positive direction as a phase difference value increases and is positive, and discretely changes the phase difference target value in a negative direction as the phase difference value increases in absolute value and is negative,
when the absolute value of the difference between the frequency of the power system and the base frequency is within a second range that is greater than the first range, the phase shift adder discretely changes the phase difference target value in the negative direction as the phase difference value increases and is positive, and discretely changes the phase difference target value in the positive direction as the phase difference value increases in absolute value and is negative, and
when the angular acceleration changes sign within a predetermined time period, the protection relay setting determiner determines the islanding condition as the de-parallelizing condition for the protection relay.

7. The power conditioner of Claim 6, wherein
when the angular acceleration does not change sign within the predetermined period and an angular acceleration absolute value is within a predetermined range, the protection relay setting determiner determines the fault ride through condition as the de-parallelizing condition for the protection relay.

8. The power conditioner of Claim 6 or 7, wherein
the phase difference target values in the second range are discrete with wider spacing than the phase difference target values in the first range.

9. A distributed power source system, comprising
the power conditioner of any one of Claims 4 through 8, and
a distributed power source connected to the power conditioner.

10. A relay operation setting method setting a de-parallelizing condition for a protection relay that controls de-parallelizing of a distributed power source from a power system, the relay operation setting method comprising:
detecting a frequency of a system voltage in the power system;
calculating an angular acceleration of the system voltage according to the frequency; and
determining, in accordance with the angular acceleration, whether or not the de-parallelizing condition for the protection relay is a fault ride through condition in which the distributed power source is not de-parallelized when the fault ride through condition is satisfied during a fault of the power system.
